# FASCICULE DE BREVET EUROPEEN

(11) **EP 1 768 814 B1**
(45) Date de publication et mention de la délivrance du brevet: **05.01.2011**
(21) Numéro de dépôt: 05781790.0
(22) Date de dépôt: 27.06.2005
(51) Int. Cl.: B23K 11/31, G01B 5/00

(54) **DISPOSITIF DE SOUDAGE AVEC UN CAPTEUR D'EFFORT MONTÉ SUR UN BRAS DE PINCE**
SCHWEISSVORRICHTUNG MIT EINEM SPANNUNGSWANDLER, DER AUF EINEM ARM EINER SCHWEISSZANGE MONTIERT IST
WELDING DEVICE HAVING A STRESS TRANSDUCER MOUNTED ON ONE ARM OF WELDING PLIERS

(30) Priorité: 28.06.2004 FR 0407055
(43) Date de publication de la demande: 04.04.2007
(73) Titulaire: Peugeot Citroën Automobiles SA, 78140 Vélizy-Villacoublay (FR)
(72) Inventeur: AUGER, Patrice, F-78650 BEYNES (FR)
(86) Numéro de dépôt international: PCT/FR2005/050503
(87) Numéro de publication internationale: WO 2006/003346

(56) Documents cités:
- EP-A- 0 969 265
- DE-A1- 10 144 731
- FR-A- 2 631 866
- US-A- 5 434 382

## Description

L'invention concerne un dispositif de soudage avec un capteur d'effort monté sur un bras de pince de soudage Un tel dispositif de soudage est connu du document US 5, 434, 382.

Les véhicules actuels sont pour la majeure partie assemblés par des points de soudure électrique. Lors de l'assemblage des carrosseries, les moyens de contrôle de la qualité des assemblages utilisés sont aujourd'hui le contrôle des paramètres de soudage des moyens de soudage, accompagnés de contrôles effectués par sondage manuel sur les lignes de fabrication ou par un contrôle destructif statistique hors ligne de fabrication.

Le soudage par résistance d'un empilement de pièces métalliques en général et le soudage par résistance avec deux électrodes et résultant en des points de soudure électrique en particulier fonctionnent selon le principe selon lequel on utilise au moins une électrode chauffante que l'on met en contact avec l'empilement de pièces à souder, on exerce un effort par l'électrode sur les pièces à souder et on fait passer un courant électrique dans cette électrode, le courant électrique passant alors par les pièces à souder. Selon le type de soudage choisi, on utilise une électrode mobile que l'on applique sur les pièces à souder, l'autre électrode étant alors constituée par celle des pièces métalliques qui est la plus éloignée de l'électrode mobile. Selon un autre type de soudage, on utilise deux électrodes mobiles, on exerce un effort par les électrodes sur les pièces à souder afin de les serrer entre les électrodes et l'on fait passer le courant à travers les pièces à souder.

Un tel soudage par points implique de déterminer pour chaque type de pièce à souder, essentiellement en fonction de la nature et de l'épaisseur des pièces à souder, comment doivent évoluer certains paramètres de soudage en fonction du temps pour obtenir une durée minimale de soudage. On règle ensuite le poste de soudage en fonction des paramètres déterminés.

Cette manière de procéder fait que le temps nécessaire pour effectuer un point de soudure est toujours le même pour un type de pièce donné. Or, dans les fabrications en très grande série, comme c'est le cas dans l'industrie automobile, il peut y avoir plusieurs milliers de points de soudure pour un seul véhicule. Il y a donc un intérêt certain à s'assurer que le suivi des paramètres de soudage choisis pour évaluer en permanence la qualité de soudage soit fiable et ne soit notamment pas faussé par des effets engendrés par l'un ou l'autre des éléments formant le poste de soudage.

En effet, un des paramètres de soudage que l'on observe en permanence et dont l'évolution dans le temps permet de tirer des conclusions sur la qualité des points de soudure, est l'effort de serrage exercé par les pinces à souder sur les pièces à souder. Ainsi, on établit, par exemple selon un procédé d'optimisation de la durée de chaque opération de soudage décrit dans le document FR-A-2 631 866, des valeurs de seuil dudit effort de serrage par des essais préalables en fonction du type des pièces à souder, on mesure l'effort de serrage au cours du cycle de soudage et on commande certaines opérations de soudage lorsque l'effort mesuré franchit les valeurs de seuil correspondantes. Plus particulièrement on établit une première valeur de seuil pendant la phase d'augmentation d'effort et fait passer le courant électrique dans les électrodes lorsque l'effort mesuré dépasse cette première valeur de seuil. On établit également une deuxième valeur de seuil indicatrice d'une qualité satisfaisante du soudage, et on vérifie pendant le passage du courant si l'effort de serrage franchit cette deuxième valeur de seuil. Et enfin, on établit une troisième valeur de seuil pendant la phase de diminution de l'effort, à laquelle on peut donner l'ordre de déplacer le robot de soudage afin que ce déplacement ait lieu le plus tôt possible après l'ouverture des électrodes. On donnera cet ordre de déplacement lorsque l'effort mesuré franchit la troisième valeur de seuil.

L'exemple ci-avant d'une surveillance de la qualité de soudage pendant le déroulement des opérations de soudage montre l'importance de la fiabilité des valeurs mesurées en temps réel pour une exploitation correcte des signaux émis par les capteurs d'effort fixés sur les bras de pince lors du soudage.

Pour évaluer les efforts exercés par les bras de soudage, on exploite le signal émis par un capteur piézoélectrique fixé sur les bras de pince. Toutefois, un phénomène d'expansion volumique du point de soudure répercute des efforts supplémentaires sur les bras de pince. En d'autres termes, pour un même effort exercé par le mécanisme des pinces de soudage sur des pièces à souder, le signal émis par le capteur piézoélectrique peut varier en fonction du phénomène d'expansion volumique.

Le but de l'invention est de proposer des moyens de fixation d'un capteur d'effort sur un bras de pince de soudage, capables d'améliorer la fiabilité des signaux électriques émis par les capteurs d'effort lors d'une opération de soudage.

Le but de l'invention est atteint avec un dispositif selon la revendication 1.

Cette solution repose sur la réflexion suivante.

La partie des bras de pince sur laquelle un capteur d'effort est monté, est généralement en cuivre et est donc comparativement molle. Contrairement à cela, le boîtier du capteur d'effort est en un matériau plus dur que le cuivre. De plus, le boîtier du capteur est en général pourvu de plusieurs plots de support. Comme le capteur est appliqué sur le bras avec un certain effort, lorsque ce dernier se déforme, le capteur risque de s'enfoncer plus ou moins dans le bras, faussant ainsi le résultat des mesures.

Pour éviter ce phénomène, ou pour le moins pour réduire son impact, on utilise une pièce intercalaire dont la dureté est inférieure à celle du boîtier du capteur, mais supérieure à celle du cuivre du bras de soudage et dont la largeur est suffisante pour la stabilité de la mesure. Cette pièce intercalaire n'a aucune liaison mécanique avec le support du capteur.

Avantageusement, la dureté de la pièce intercalaire est de l'ordre de 350 à 450 Hv_{0,3}, de préférence d'environ 400 Hv_{0,3}.

Comme cela sera décrit plus en détail dans la description d'un mode de réalisation de l'invention, le capteur ne doit pas être fixé sur le bras de soudage par vissage, mais uniquement par serrage. Le serrage est obtenu à l'aide d'un support ayant la forme générale d'un collier entourant à la fois le bras de soudage et le capteur.

Afin d'obtenir le meilleur appui possible du capteur sur le bras de soudage, la pièce intercalaire est un élément essentiellement plat présentant deux faces de montage opposées dont la première est destinée à être mise en contact avec le bras de soudage et dont la seconde est destinée à être mise en contact avec le capteur. Chacune des deux faces de montage présente une forme complémentaire par rapport à la forme respectivement du bras de soudage et du capteur pour réaliser, le cas échéant, une adaptation de forme entre le bras de soudage et le capteur. En effet, le boîtier du capteur a une face d'appui sensiblement plate, la faible épaisseur des plots de support, qui est de l'ordre de 0,5 mm environ, n'influençant pas beaucoup cet aspect. Contrairement à cela, la partie du bras de pince sur laquelle le capteur doit être monté peut être ronde, ce qui correspond à un bras de soudage ayant une section circulaire, ou légèrement aplatie, ce qui correspond à un bras de soudage ayant un méplat. En conséquence, la seconde face de montage de la pièce intercalaire est soit plane, soit concave avec un rayon de courbure égal à celui du bras de pince.

Selon un mode de réalisation particulier du support, celui-ci est conformé de manière à permettre une orientation du capteur et de la pièce intercalaire lors de leur montage.

La pièce intercalaire est conformée soit spécifiquement pour chaque diamètre de bras de pince, soit de manière à être adaptable à plusieurs diamètres de bras de pince.

D'autres caractéristiques et avantages de la présente invention ressortiront de la description ci-après d'un mode de réalisation de l'invention. Cette description est faite en référence aux dessins dans lesquels :
- la figure 1 est une vue schématique partielle d'un poste de soudage avec un capteur de force sur un des bras de pince ;
- la figure 2 représente schématiquement la disposition d'un capteur de force sur un bras de pince ;
- la figure 3 et la figure 4 montrent la disposition de la figure 2 en une vue axiale pour deux types de bras de soudage différents ;
- la figure 5 montre en une vue latérale un support pour la fixation d'un capteur sur un bras de pince, le bras de pince étant pourvu d'un méplat ;
- la figure 6 montre une coupe transversale suivant la ligne VI-VI de la figure 5 ;
- les figures 7 et 8 montrent un support respectivement en vue axiale et en perspective pour la fixation d'un capteur sur un bras de pince à section circulaire ; et
- les figures 9 et 10 montrent le support respectivement de la figure 6 et de la figure 7 monté sur un bras de pince.

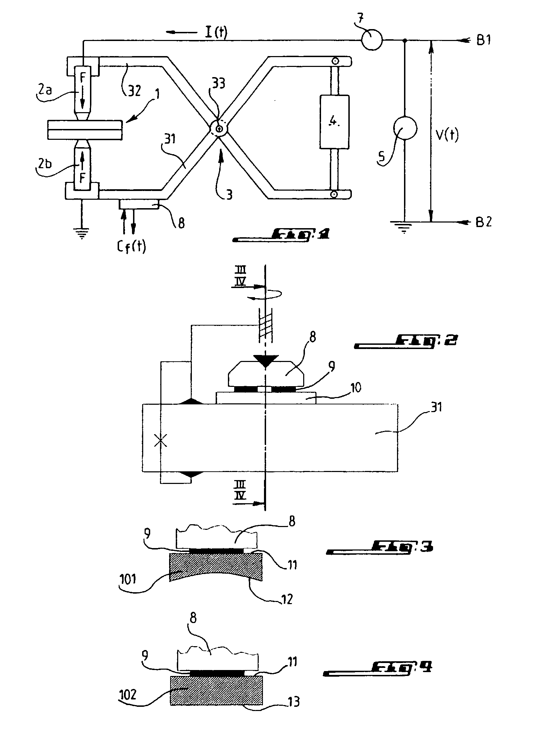

Dans un procédé de soudage par résistance, les pièces métalliques à souder forment entre elles un empilement 1 (figure 1) et sont enserrées entre deux électrodes 2a, 2b, auxquelles une pince 3, actionnée par un vérin 4, applique un effort de serrage F. La pince de soudage 3 comprend deux bras 31, 32 reliés l'un à l'autre de manière pivotante par un point charnière 33. Une source de tension représentée par ses bornes B1, B2, délivrant une tension V(t), variable en fonction du temps t et mesurable au moyen d'un voltmètre 5, est raccordée aux électrodes 2a, 2b.

La tension V(t) est avantageusement appliquée sous la forme d'une série d'impulsions périodiques engendrant l'apparition d'un courant de soudage d'intensité I(t), variable en fonction du temps t et mesurable au moyen d'un ampèremètre 7. L'application de la tension V(t) est commandée par un dispositif de contrôle et de commande en fonction de signaux d'entrée que le dispositif de contrôle et de commande reçoit d'un capteur d'effort 8 monté sur un des bras 31, 32 de la pince de soudage 3. Dans la version représentée sur la figure 1, le capteur 8 est fixé sur le bras 31.

La surveillance de l'effort de serrage F est réalisée en mesurant, de préférence avant, pendant et après le passage du courant, un paramètre d'effort C_{f}(t) représentatif de l'effort de serrage F, par exemple la contrainte à laquelle est soumis un bras 31 de la pince 3. Ce paramètre d'effort C_{f}(t) est ensuite comparé à un premier seuil C_{F1} pendant le passage du courant I(t). Ce paramètre d'effort C_{f}(t) évolue au cours des différentes phases du procédé de soudage. Pendant une première période t1, qui est appelée "phase d'accostage" et au cours de laquelle les électrodes 2a, 2b sont déplacées jusqu'à enserrer fermement l'empilement 1 de pièces à souder, le paramètre C_{f}(t) évolue de façon croissante et rapide.

La phase d'accostage t₁ est suivie d'une phase de serrage t₂ plus ou moins longue pendant laquelle le paramètre d'effort C_{f}(t) est constant. La durée de la phase de serrage est déterminée de sorte que la durée totale de la phase d'accostage et de la phase de serrage soit au moins égale à un intervalle de temps que mettrait le vérin 4 le plus lent à appliquer un effort correspondant au seuil d'accostage C_{F0} pour obtenir un serrage stabilisé. Dès que l'effort de serrage F est stabilisé, la tension V(t) est appliquée entre les électrodes 2a, 2b. Le courant I(t) commence alors à échauffer les pièces métalliques de l'empilement 1 par effet Joule.

Le courant I(t) dépend de la résistance électrique totale R₀(t) que présente, à un moment donné, l'empilement 1 de pièces à souder. Cette résistance électrique totale comprend essentiellement une composante R_{c}(t), représentative de la résistance due au contact mutuel imparfait des pièces de l'empilement 1, et une composante Rₜ(t) représentative de la résistance intrinsèque du matériau constitutif des pièces à souder. La composante Rₜ(t) dépend de la température de l'empilement 1. Elle augmente avec la température des pièces et croît donc en fonction du temps qui s'écoule depuis l'instant de la première application de la tension V(t). Cette composante ne décroît qu'après la fin de l'application de la tension V(t).

La diminution de la résistance totale R₀(t) provoque une augmentation du courant I(t), ce qui augmente l'énergie électrique dissipée, aboutissant à une brusque élévation de la température de l'empilement 1 de pièces à souder. L'intervalle de temps pendant lequel la tension V(t) est appliqué aux électrodes 2a, 2b, appelé phase d'expansion volumique de l'empilement de pièces métalliques 1, est caractérisé par une brusque dilatation de l'empilement des pièces métalliques, ce qui provoque une augmentation de l'effort de serrage F et donc aussi du paramètre d'effort C_{f}(t). Communément, la tension V(t) est coupée dès que le paramètre d'effort C_{f}(t) a dépassé un seuil minimal C_{F1} supérieur au seuil C_{F0} correspondant à l'effort d'accostage.

Le refroidissement du point de soudure qui en résulte et qui caractérise une phase de solidification t₄, provoque une rétractation de l'empilement de pièces métalliques 1 entraînant à son tour une diminution de l'effort de serrage F et donc aussi une diminution du paramètre d'effort C_{f}(t).

A la fin de la phase de solidification t₄, c'est-à-dire après solidification complète de l'empilement 1 de pièces à souder, l'effort de serrage est relâché pour permettre le déplacement des électrodes 2a, 2b vers un autre endroit sur l'empilement de pièces à souder.

Afin que le capteur d'effort 8 destiné à être monté sur le bras 31 de la pince de soudage 3 puisse fidèlement engendrer des signaux électriques représentatifs des moindres variations d'effort, le capteur 8, qui, dans l'exemple décrit ici, est pourvu de deux plots de support 9, est posé sur une pièce intercalaire 10 posée elle-même sur le bras de pince 31, comme cela est représenté sur la figure 2.

Pour tenir compte de la forme particulière du bras de pince 31 à l'endroit où le capteur doit être monté, la pièce intercalaire 10 présente deux faces de montage dont la première, référencée 11, est mise en contact avec le capteur 8 et dont la seconde, référencée respectivement 12 ou 13, est destinée à être mise en contact avec le bras de soudage 31. La référence 12 désigne la seconde face de montage d'une pièce intercalaire 101, qui est une variante de la pièce intercalaire 10 destinée spécifiquement à la fixation du capteur 8 sur un bras de pince 31 ayant une section transversale circulaire, comme cela est représenté sur la figure 3.

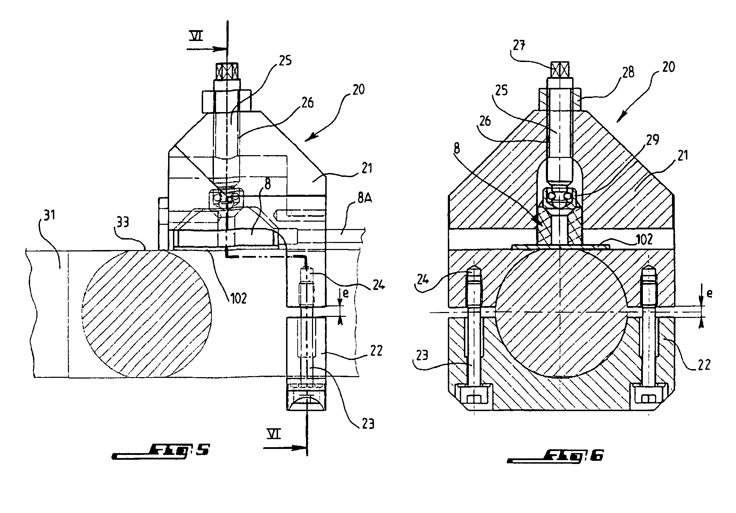

L'autre variante de réalisation de la pièce intercalaire 10, référencée 102, comporte une seconde face de montage 13 destinée à être mise en contact avec un bras de soudage 31 pourvu, au moins sur une partie de sa longueur, d'un méplat 33. Cette variante est représentée sur la figure 4 et peut également être comprise à l'aide de la figure 5 décrite ci-après.

Selon les dispositions représentées sur la figure 5, un capteur 8 pourvu d'un câble 8A par lequel il est relié au dispositif de contrôle et de commande mentionné plus haut, est monté sur un bras de pince 31 comportant sur une partie de sa longueur un méplat 33, au moyen d'un support 20. Le support 20 a la forme générale d'un collier en L en deux parties, dont une partie supérieure 21 destinée à recevoir le capteur 8 et la pièce intercalaire 102 est conformée pour être en appui sur le bras de pince 31 d'un côté du bras par rapport à son axe longitudinal, et une partie inférieure 22 destinée à être mise en appui sur le bras de pince 31 de l'autre côté par rapport à son axe longitudinal. Les deux parties 21, 22 du support 20 sont reliées l'une à l'autre et serrées sur le bras de pince 31 par des vis 23 introduites dans la partie 22 en direction de la partie 21 où elles s'engagent dans des taraudages 24 correspondants. Les dimensions circonférentielles des parties 21 et 22 sont choisies de manière à assurer que, lorsque les deux parties sont vissées ensemble autour d'un bras de pince 31, une distance e sera maintenue entre les faces en regard de ces deux parties et qu'il soit évité ainsi un serrage insuffisant dû à un appui de l'une sur l'autre des deux parties 21, 22.

La conception en L du support 20 est choisie pour la raison suivante. Au niveau du capteur et de son support, le bras se comporte comme une poutre encastrée au niveau de la zone de contact entre les deux parties du support. S'il n'y a qu'un seul point d'encastrement, comme dans l'agencement selon l'invention, la déformation est relativement importante et facilement mesurable.

Si l'on choisissait, par contre, une conception en T, il y aurait deux points d'encastrement et le bras se déformerait beaucoup moins, car cela créerait un pont entre les deux extrémités du capteur. Une partie des contraintes serait alors reprise en parallèle pour le montage et diminuerait d'autant la sensibilité du dispositif.

Le support 20 comprend par ailleurs une tige de serrage filetée 25 engagée dans, et coopérant avec, un taraudage 26 pratiqué dans la partie supérieure 21 du support 20. La tige de serrage 25, qui comporte deux extrémités opposées dont une est avantageusement pourvue d'une tête hexagonale 27 pour simplifier son déplacement axial par vissage à l'aide d'un outil adéquat, prend appui sur le boîtier du capteur 8 pour appuyer le capteur 8, par le biais de la pièce intercalaire 102, sur le bras de pince 31.

Comme cela est représenté plus particulièrement sur la figure 6, la tige de serrage 25 est pourvue à celle de ses deux extrémités opposées située à l'intérieur de la première partie 21 du support 20, d'une goupille 29 ou d'une bague par laquelle la tige 25 prend appui sur le capteur 8 au moment du montage de ce dernier sur le bras de pince 31. Lorsque le capteur 8 est définitivement monté, la position de la tige 25 est sécurisée grâce à un contre-écrou 28 prenant appui sur la première partie 21 du support 20. Le fait d'équiper la tige 25 d'une goupille ou bague 29 à la place, par exemple, d'une tête plate rigide ou d'une extrémité sphérique, permet d'orienter le capteur 8 lors de son montage et de compenser ainsi des difficultés éventuelles de positionnement du capteur 8 sur le bras de pince 31, quelles que soient les raisons pour ces difficultés. La pièce 29 est donc simplement une pièce intermédiaire destinée à compenser les effets d'un éventuel désalignement entre la tige 25 et le capteur 8.

De plus, l'utilisation d'une goupille 29 à la place d'une pièce fixe assure un certain découplage entre le mouvement de rotation de la tige 25 lors du montage du capteur et l'extrémité de la tige 25 qui est directement en contact avec le capteur 8. Ce découplage constitue en même temps une sorte de protection du boîtier du capteur 8 contre un endommagement du boîtier par enfoncement en rotation de la tige 25 sur le capteur 8.

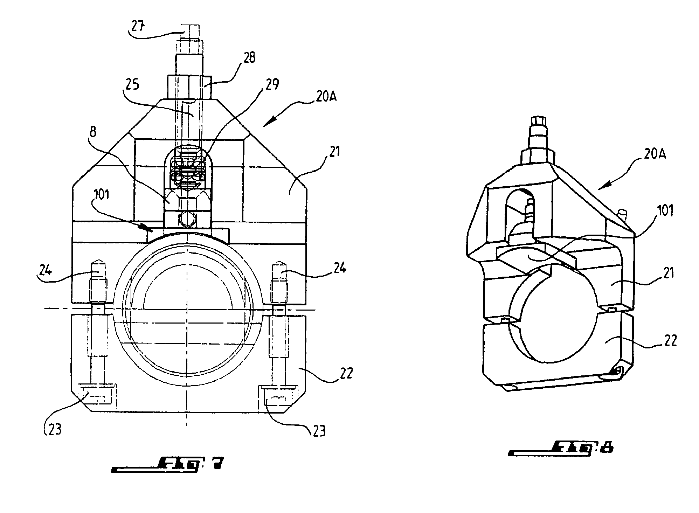

Les figures 7 et 8 représentent respectivement en une vue axiale (figure 7) et en une vue en perspective (figure 8) un support de montage utilisant une pièce intercalaire 101 telle que celle représentée sur la figure 3 et décrite en référence à cette figure.

Le support 20A se distingue du support de montage 20, représenté sur les figures 5 et 6, essentiellement par la présence de la pièce intercalaire 101 à la place de la pièce intercalaire 102. En effet, le support de montage 20A est destiné au montage d'un capteur 8 sur un bras de pince 31 ayant une section circulaire, pour laquelle la pièce intercalaire est particulièrement conformée.

Les autres éléments du support 20A correspondant à ceux du support 20, la figure 7 reprend les mêmes références que pour les pièces correspondantes de la figure 6.

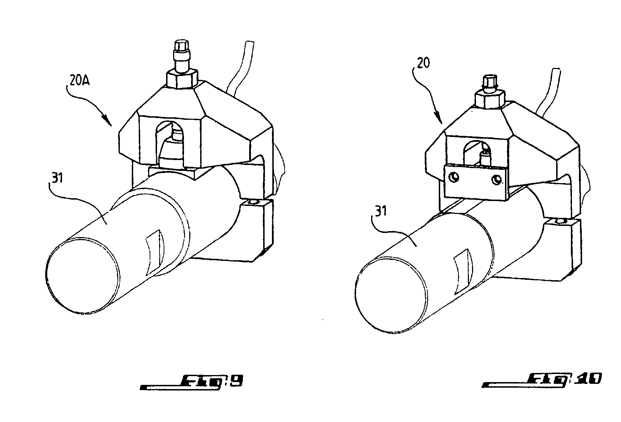

Les figures 9 et 10 montrent les supports 20A et 20 respectivement de la figure 8 et de la figure 5 en une vue en perspective et à l'état monté sur un bras de pince 31. Chacune de ces figures reprend les mêmes références pour les mêmes éléments du support concerné. On y notera plus particulièrement sur la figure 10 une bride servant à rendre le capteur imperdable lors des manipulations.

## Revendications

1. Dispositif de soudage comprenant des bras de pince (31,32) sur lesquels montés des électrodes (2a, 2b), les bras de pince (31,32) étant destinés à appliquer un effort de serrage aux électrodes tandis qu'un courant de soudage passe entre les électrodes, ledit dispositif comprenant un capteur d'effort (8) monté sur au moins un bras de pince (31,32) et une pièce intercalaire (10) disposée entre le bras de pince (31) et le capteur d'effort (8), la pièce intercalaire (10) présentant une première face (11) de montage destinée à être mise en contact avec le capteur (8) et une seconde face (12 ou 13) de montage destinée à être mise en contact avec le bras de pince (31), le capteur (8) étant fixé sur le bras de pince (31) à l'aide d'un support de montage (20),
**caractérisé en ce que** le support (20) comprend une tige de serrage filetée (25) engagée dans, et coopérant avec, un taraudage (26) pratiqué dans une partie supérieure (21) du support (20), la tige de serrage (25) prenant appui sur le boîtier du capteur (8) pour l'appuyer sur le bras de pince (31) et étant sécurisée en position grâce à un contre-écrou (28).

2. Dispositif selon la revendication 1, **caractérisé en ce que** la pièce intercalaire (10) est réalisée en un matériau dont la dureté est intermédiaire entre la dureté du bras de pince (31) et la dureté du capteur (8).

3. Dispositif selon la revendication 1 ou 2, **caractérisé en ce que** la pièce intercalaire (10) est réalisée en un matériau dont la dureté est de l'ordre de 350 à 450 HV_{O, 3}.

4. Dispositif selon l'une quelconque des revendications 1 à 3, **caractérisé en ce que** la pièce intercalaire (10) est un élément essentiellement plat, dont chaque face de montage (11, 12 ou 13) présente une forme complémentaire par rapport à la forme respectivement du bras de soudage (31) et du capteur (8) pour réaliser une adaptation de forme entre le bras (31) et le capteur (8).

5. Dispositif selon l'une quelconque des revendications 1 à 4, **caractérisé en ce que** la pièce intermédiaire (10) est réalisée en un matériau dont la dureté est de l'ordre de 400 HV_{O, 3} environ.

6. Dispositif selon l'une quelconque des revendications 1 à 5, **caractérisé en ce que** le support de montage (20) est conformé de manière à permettre une orientation du capteur (8) lors de son montage.

7. Dispositif selon l'une quelconque des revendications 1 à 6, **caractérisé en ce que** le support de montage (20) a la forme générale d'un collier en L en deux parties (21, 22) enserrant le bras de pince (31), dont une partie supérieure (21) est conformée pour être en appui sur le bras de pince (31) d'un côté du bras par rapport à son axe longitudinal, et une partie inférieure (22) est destinée à être mise en appui sur le bras de pince (31) de l'autre côté par rapport à son axe longitudinal.

8. Dispositif selon l'une quelconque des revendications 1 à 7, **caractérisé en ce que** la pièce intercalaire (10) est conformée spécifiquement pour chaque diamètre de bras de pince.

9. Dispositif selon l'une quelconque des revendications 1 à 7, **caractérisé en ce que** la pièce intercalaire (10) est adaptable à plusieurs diamètres de bras de pince.

## Claims

1. Welding device comprising gripper arms (31, 32) on which electrodes (2a, 2b) are mounted, the gripper arms (31, 32) being intended to apply a clamping force to the electrodes while a welding current passes between the electrodes, said device comprising a force sensor (8) mounted on at least one gripper arm (31, 32) and a spacer piece (10) arranged between the gripper arm (31) and the force sensor (8), the spacer piece (10) having a first mounting face (11) intended to be placed in contact with the sensor (8) and a second mounting face (12 or 13) intended to be placed in contact with the gripper arm (31), the sensor (8) being attached to the gripper arm (31) with the aid of a mounting support (20),
**characterised in that** the support (20) comprises a threaded clamping rod (25) engaged in, and cooperating with, a tapped hole (26) formed in an upper part (21) of the support (20), the clamping rod (25) bearing against the casing of the sensor (8) in order to press it against the gripper arm (31) and being secured in position by virtue of a locking nut (28).

2. Device according to claim 1, **characterised in that** the spacer piece (10) is made from a material having a hardness that is intermediate between the hardness of the gripper arm (31) and the hardness of the sensor (8).

3. Device according to claim 1 or 2, **characterised in that** the spacer piece (10) is made from a material having a hardness of around 350 to 450 HV_{0.3}.

4. Device according to any one of claims 1 to 3, **characterised in that** the spacer piece (10) is a substantially flat element, each mounting face (11, 12 or 13) of which has a shape complementary to the shape respectively of the welding arm (31) and of the sensor (8) so as to create a shape match between the arm (31) and the sensor (8).

5. Device according to any one of claims 1 to 4, **characterised in that** the intermediate piece (10) is made from a material having a hardness of around 400 HV_{0.3}.

6. Device according to any one of claims 1 to 5, **characterised in that** the mounting support (20) is shaped so as to allow an orientation of the sensor (8) during the mounting thereof.

7. Device according to any one of claims 1 to 6, **characterised in that** the mounting support (20) has the general shape of an L-shaped collar in two parts (21, 22) surrounding the gripper arm (31), of which an upper part (21) is shaped so as to bear against the gripper arm (31) on one side of the arm with respect to its longitudinal axis, and a lower part (22) is intended to bear against the gripper arm (31) on the other side with respect to its longitudinal axis.

8. Device according to any one of claims 1 to 7, **characterised in that** the spacer piece (10) is shaped specifically for each gripper arm diameter.

9. Device according to any one of claims 1 to 7, **characterised in that** the spacer piece (10) can be adapted to a plurality of gripper arm diameters.

## Patentansprüche

1. Schweißvorrichtung, umfassend Vorrichtungen nach Anspruch 1 (31, 32), an denen Elektroden (2a, 2b) montiert sind, wobei die Vorrichtungen nach Anspruch 1 (31, 32) dazu gedacht sind, auf die Elektroden eine Klemmkraft auszuüben, während ein Schweißstrom zwischen den Elektroden fließt, wobei die Vorrichtung einen Kraftsensor (8), der an mindestens einer Vorrichtung nach Anspruch 1 (31, 32) montiert ist, und ein Zwischenstück (10), das zwischen der Vorrichtung nach Anspruch 1 (31) und dem Kraftsensor (8) angeordnet ist, umfasst, wobei das Zwischenstück (10) eine erste Montageseite (11), die dazu gedacht ist, mit dem Sensor (8) in Kontakt gebracht zu werden, und eine zweite Montageseite (12 oder 13), die dazu gedacht ist, mit der Vorrichtung nach Anspruch 1 (31) in Kontakt gebracht zu werden, aufweist, wobei der Sensor (8) an der Vorrichtung nach Anspruch 1 (31) anhand eines Montageträgers (20) befestigt ist,
**dadurch gekennzeichnet, dass** der Träger (20) eine mit einem Gewinde versehene Klemmstange (25) umfasst, die in ein Innengewinde (26) eingreift und damit zusammenwirkt, das in einem oberen Teil (21) des Trägers (20) angebracht ist, wobei sich die Klemmstange (25) auf dem Gehäuse des Sensors (8) abstützt, um diesen auf die Vorrichtung nach Anspruch 1 (31) zu drücken, und wobei sie durch eine Gegenmutter (28) an Ort und Stelle abgesichert ist.

2. Vorrichtung nach Anspruch 1, **dadurch gekennzeichnet, dass** das Zwischenstück (10) aus einem Material ausgebildet ist, dessen Härte zwischen der Härte der Vorrichtung nach Anspruch 1 (31) und der Härte des Sensors (8) liegt.

3. Vorrichtung nach Anspruch 1 oder 2, **dadurch gekennzeichnet, dass** das Zwischenstück (10) aus einem Material ausgebildet ist, dessen Härte ungefähr 350 bis 450 HV_{O, 3} beträgt.

4. Vorrichtung nach einem der Ansprüche 1 bis 3, **dadurch gekennzeichnet, dass** das Zwischenstück (10) ein im Wesentlichen flaches Element ist, von dem jede Montageseite (11, 12 oder 13) eine im Verhältnis zu der Form jeweils des Schweißarms (31) und des Sensors (8) passende Form aufweist, um eine Formanpassung zwischen dem Arm (31) und dem Sensor (8) auszubilden.

5. Vorrichtung nach einem der Ansprüche 1 bis 4, **dadurch gekennzeichnet, dass** das dazwischen liegende Stück (10) aus einem Material ausgebildet ist, dessen Härte bei ungefähr 400 HV_{O, 3} liegt.

6. Vorrichtung nach einem der Ansprüche 1 bis 5, **dadurch gekennzeichnet, dass** der Montageträger (20) derart gestaltet ist, dass er eine Orientierung des Sensors (8) während der Montage ermöglicht.

7. Vorrichtung nach einem der Ansprüche 1 bis 6, **dadurch gekennzeichnet, dass** der Montageträger (20) die allgemeine Form einer L-förmigen Krempe aus zwei Teilen (21, 22), die den Greiferarm umklammern (31), aufweist, wovon ein oberer Teil (21) gestaltet ist, um an dem Greiferarm (31) auf einer Seite des Arms im Verhältnis zu seiner Längsachse anzuliegen, und ein unterer Teil (22) dazu gedacht ist, an den Greiferarm (31) der anderen Seite im Verhältnis zu seiner Längsachse angelegt zu werden.

8. Vorrichtung nach einem der Ansprüche 1 bis 7, **dadurch gekennzeichnet, dass** das Zwischenstück (10) spezifisch für jeden Greiferarmdurchmesser gestaltet ist.

9. Vorrichtung nach einem der Ansprüche 1 bis 7, **dadurch gekennzeichnet, dass** das Zwischenstück (10) an mehrere Greiferarmdurchmesser anpassbar ist.
